# EUROPÄISCHE PATENTANMELDUNG

(11) **EP 0 628 241 A1**
(43) Veröffentlichungstag der Anmeldung: **14.12.1994**
(21) Anmeldenummer: 94106728.2
(22) Anmeldetag: 29.04.1994
(51) Int. Cl.: A01F 12/18, A01F 12/28

(54) **Vorrichtung zum Abscheiden von Restgut aus ein Dreschwerk verlassendem gedroschenem Erntegut**

(30) Priorität: 10.05.1993 US 59556
(71) Anmelder: DEERE & COMPANY, Moline, Illinois 61265 (US)
(72) Erfinder: Coers, Bruce Alan, Hillsdale, Illinois 61265 (US)
(74) Vertreter: Feldmann, Bernhard

(57) **Zusammenfassung**

Eine Vorrichtung zum Abscheiden von Restgut aus ein Dreschwerk verlassendem gedroschenem Erntegut besteht aus einer ersten und einer zweiten Abscheidetrommel (24, 26), diesen zugeordneten verstellbaren Abscheidekörben (28, 30) und einer Verstellvorrichtung (34), die an den jeweils einander zugelegenen Endseiten der Abscheidekörbe (28, 30) angreift und mit der diese zwischen einer den Abscheidetrommeln (24, 26) radial naheliegenden und einer diesen radial fernliegenden Stellung verstellbar sind.

## Beschreibung

Die Erfindung betrifft eine Vorrichtung zum Abscheiden von Restgut aus ein Dreschwerk verlassendem gedroschenem Erntegut bestehend aus einer ersten und einer zweiten Abscheidetrommel und diesen zugeordneten verstellbaren Abscheidekörben.

Aus der WO-A1-91/00001 geht ein Mähdrescher mit einer einzigen Dreschtrommel und sich daran anschließend einer Wendetrommel und einer Abscheidetrommel hervor. Unterhalb der Wende- und der Abscheidetrommel befindet sich jeweils ein Korb mit Durchtrittsöffnungen für abgeschiedenes Gut, wobei beide Körbe an den einander zugelegenen Endkanten gelenkig miteinander verbunden sind. Beide Körbe können mittels eines Ritzelantriebs und einer Führung gemeinsam aus einer Stellung unterhalb der Wende- und Abscheidetrommel in eine oberhalb von diesen befindliche Stellung gebracht werden, in der eine Bearbeitung des die Dreschtrommel verlassenden Guts unterbleibt und dieses stattdessen direkt auf die erste Stufe nachfolgender Strohschüttler abgegeben wird. Auf diese Weise wird eine übermäßige Bearbeitung brüchigen Ernteguts und somit ein hoher Kurzstrohanteil vermieden.

Die DE-A1-40 23 720 beschreibt einen Mähdrescher mit einer Dreschtrommel und einem diese teilweise umgebenden Dreschkorb. Dieser Dreschtrommel ist ein weiteres Dreschwerk vorgeschaltet, das ebenfalls eine Dreschtrommel und einen Dreschkorb enthält. Die beiden einander zugelegenen Enden der Dreschkörbe sind gelenkig miteinander verbunden und an eine Verstellvorrichtung angelenkt. Mittels dieser Verstellvorrichtung kann gleichzeitig der Spalt zwischen den Dreschkörben und den Dreschtrommeln verändert werden. Dem stromabwärts gelegenen Dreschwerk ist eine Wendetrommel nachgeschaltet, mit deren Hilfe das ankommende ausgedroschene Gut einer Strohschüttlereinheit zugeführt wird. Unterhalb der Wendetrommel erstreckt sich in üblicher Anordnung und Ausbildung ein Fingerrechen von dem zweiten Dreschkorb weg. Eine Verstellung der beiden Dreschkörbe hält sich in den Grenzen, die durch die unterschiedlichen Eigenschaften und Beschaffenheiten der zu dreschenden Erntegüter vorgegeben und somit relativ eng sind. Eine Veränderung der Abscheidung von Restgut aus dem das Dreschwerk verlassenden Gutstrom nach dem Verlassen der beiden Dreschwerke ist nicht möglich. Darüberhinaus führt die Verwendung zweier Dreschwerke zu einem hohen Kurzstrohanteil, der eine Reinigung des Getreides erschwert.

Die der Erfindung zugrunde liegende Aufgabe wird darin gesehen, eine Abscheidevorrichtung vorzuschlagen, die mit relativ geringem Aufwand ein Überdreschen des das Dreschwerk verlassenden Ernteguts vermeidet.

Diese Aufgabe wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise kann unabhängig von der Einstellung des Dreschspalts zwischen Dreschtrommel und Dreschkorb in dem Dreschwerk, der sich nahezu ausschließlich nach der Fruchtart richtet, Einfluß auf die Abscheidung zwischen den nachfolgenden Abscheidetrommeln und Abscheidekörben genommen werden, die wesentlich von der Gutbeschaffenheit, z. B. Trockenheitsgrad, Verschmutzungsgrad, Reifegrad und dergleichen abhängt. Je nach Ausbildung der Verstellvorrichtung können die Abscheidekörbe so weit radial von den Abscheidetrommeln wegbewegt werden, daß diese wirkungslos werden.

Zur Überbrückung eines gegebenenfalls zwischen beiden Abscheidekörben entstehenden Spalts ist ein einstellbarer Übergaberost vorgesehen, mit dessen Hilfe eine einwandfreie Überleitung des Guts von einem Abscheidekorb auf den nächsten stattfindet, wobei auch dieser Übergaberost gegenüber den Abscheidekörben einstellbar ist.

Eine einfache Art der Verstellung ergibt sich durch die Verwendung von Steuerkurventeilen, die an den einander zugelegenen Endseiten der Abscheidekörbe und gegebenenfalls an dem Übergaberost angreifen.

Infolge der Verwendung von Steuerkurventeilen, die exzentrisch in ortsfesten Lagern getragen und in wenigstens zwei Stellungen festlegbar sind, können die Abscheidekörbe wenigstens einenends zwischen zwei Extremstellungen gegenüber den Abscheidetrommeln verstellt werden.

Nach einer detaillierten Ausführung der Verstellvorrichtung ist vorgesehen, daß die Verstellvorrichtung als Steuerkurventeil ausgebildet ist, der mit dem rückwärtigen Ende des ersten Abscheidekorbs und dem vorderen Ende des zweiten Abscheidekorbs in Eingriff steht und durch eine Drehung um ca. 180° die Abscheidekörbe in eine obere oder untere Stellung bringt.

Damit sich der Steuerkurventeil und gegebenenfalls der Exzenter gegenüber den Abscheidekörben verstellen kann, ist vorgesehen, daß in vorzugsweise seitlichen Schienen der Abscheidekörbe Aussparungen und/oder Schlitze zur Aufnahme des Steuerkurventeils vorgesehen sind, die entsprechenden Spielraum für die Bewegung des Steuerkurventeils belassen. Demnach kann sich der Steuerkurventeil in einer z. B. ovalen Aussparung und/oder einem U-förmigen Schlitz zu den jeweiligen Schwenkpunkten hin frei bewegen, während er in der Richtung zu bzw. von den Abscheidetrommeln weg die Abscheidekörbe und gegebenenfalls den Übergaberost in radialer Richtung mitnimmt.

Das Vorhandensein unterschiedlicher Durchmesser an den Kurvenscheiben des Steuerkurventeils sichert dessen Lage in den jeweiligen Abscheidekörben.

Wenn der Übergaberost mittels Abdeckungen verschließbar ist, kann er auch nach Einnahme seiner weniger aggressiven Stellung von seiner Abscheidewirkung vollends befreit werden, was bei Spezialgütern, z. B. beim Ernten von Sämereien, von Vorteil ist.

Eine im wesentlichen ausreichende Anpassung der Abscheidekörbe und des zwischen ihnen gelegenen Übergaberostes wird dadurch hervorgerufen, daß der Übergaberost einerseits ein radiales, aggressives Profil und andererseits ein tangentiales, weniger aggressives Profil aufweist, von denen das radiale Profil in einer oberen Stellung der Abscheidekörbe und das tangentiale Profil in einer unteren Stellung der Abscheidekörbe dem Gutfluß zugewandt ist.

Mittels einer Befestigungsplatte kann der Übergaberost einfach an den Steuerkurventeil angeschlossen und infolgedessen von diesem mitbewegt werden. Außerdem kann er auf diese Weise zur Wartung leicht entnommen werden.

In der Zeichnung ist ein nachfolgend näher beschriebenes Ausführungsbeispiel der Erfindung dargestellt. Es zeigt:
- Fig. 1: einen Mähdrescher in schematischer Darstellung und Seitenansicht,
- Fig. 2: zwei miteinander verbundene Abscheidekörbe in einer oberen Stellung in Seitenansicht,
- Fig. 3: die zwei miteinander verbundenen Abscheidekörbe in einer unteren Stellung in Seitenansicht,
- Fig. 4: die zwei miteinander verbundenen Abscheidekörbe in Draufsicht,
- Fig. 5: eine Verstellvorrichtung in Vorderansicht,
- Fig. 6: die Verstellvorrichtung aus Figur 5 in Seitenansicht und
- Fig. 7: einen Übergaberost zwischen beiden Abscheidekörben mit Abdeckungen im Schnitt entlang der Linie 7-7 in Figur 4 und in Blickrichtung der dazugehörigen Pfeile.

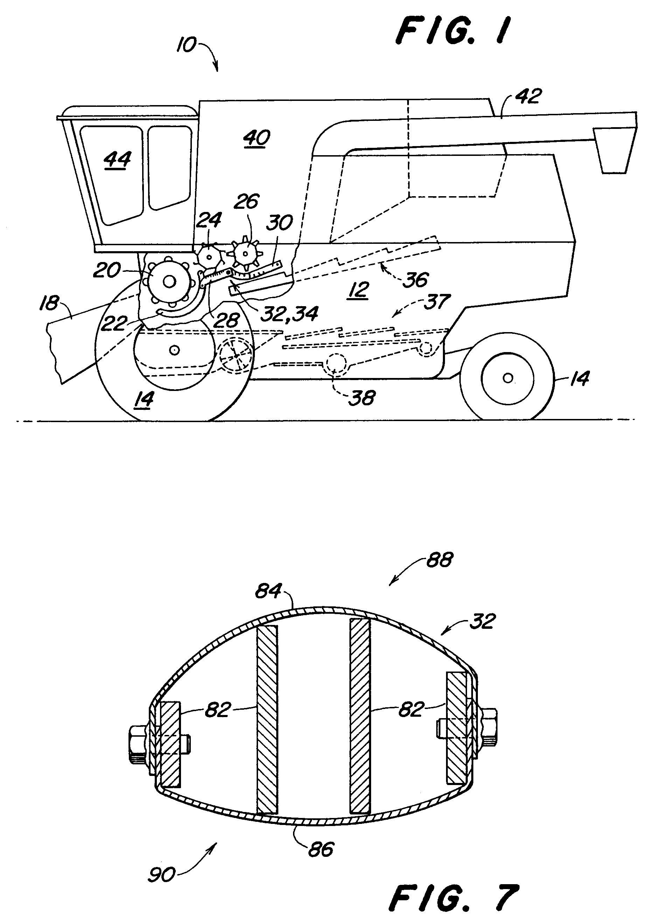

Ein in Figur 1 gezeigter Mähdrescher 10 enthält ein Chassis 12 und Räder 14, die sich von dem Chassis 12 zu dem Boden erstrecken und den Mähdrescher 10 auf diesem tragen und über ein Feld bewegen. Der Mähdrescher 10 ist mit einer nicht gezeigten Erntebergungsvorrichtung ausgerüstet, die Gut erntet und es einem Schrägförderer 18 zuführt. Der Schrägförderer 18 leitet das Erntegut einer Dreschtrommel 20 und einem Dreschkorb 22 zu, die gemeinsam ein Dreschwerk bilden, um das Erntegut auszudreschen. Von der Dreschtrommel 20 aus gelangt das Erntegut zu einer ersten und einer zweiten als Leistentrommel ausgebildeten Abscheidetrommel 24 und 26. Die erste Abscheidetrommel 24 ist mit einem ersten Abscheidekorb 28 und die zweite Abscheidetrommel 26 mit einem zweiten Abscheidekorb 30 versehen, bzw. sie werden von diesen teilweise umgeben. Ein Übergaberost 32 und eine Verstellvorrichtung 34 sind zwischen dem ersten und dem zweiten Abscheidekorb 28 und 30 angeordnet. Die Verstellvorrichtung 34 dient der Einstellung der relativen Stellung der Abscheidekörbe 28 und 30 untereinander, gegenüber den Abscheidetrommeln 24, 26 und in bezug auf den Übergaberost 32.

Nach der ersten und der zweiten Abscheidetrommel 24 und 26 gelangt das Erntegut zu einem Abscheidesystem 36 mit Strohschüttlern, die weiterhin Getreide vom dem ausgedroschenen Gut trennen. Getreide, also hauptsächlich Körner und Spreu fallen nach der Dreschtrommel 20, den Abscheidetrommeln 24, 26 und dem Abscheidesystem 36 einem Reinigungssystem 37 zu, das die Spreu von dem Getreide trennt. Das gereinigte Getreide wird zu einer Körnerschnecke 38 geleitet, die es einem nicht gezeigten Körnerelevator aufgibt. Der Körnerelevator befördert das Getreide nach oben zu einem Korntank 40, wo es kurzzeitig gelagert wird und von wo aus es mittels einer Entladeschnecke 42 ausgetragen werden kann. Die Bedienung des Mähdreschers 10 erfolgt von einer Fahrerkabine 44 aus.

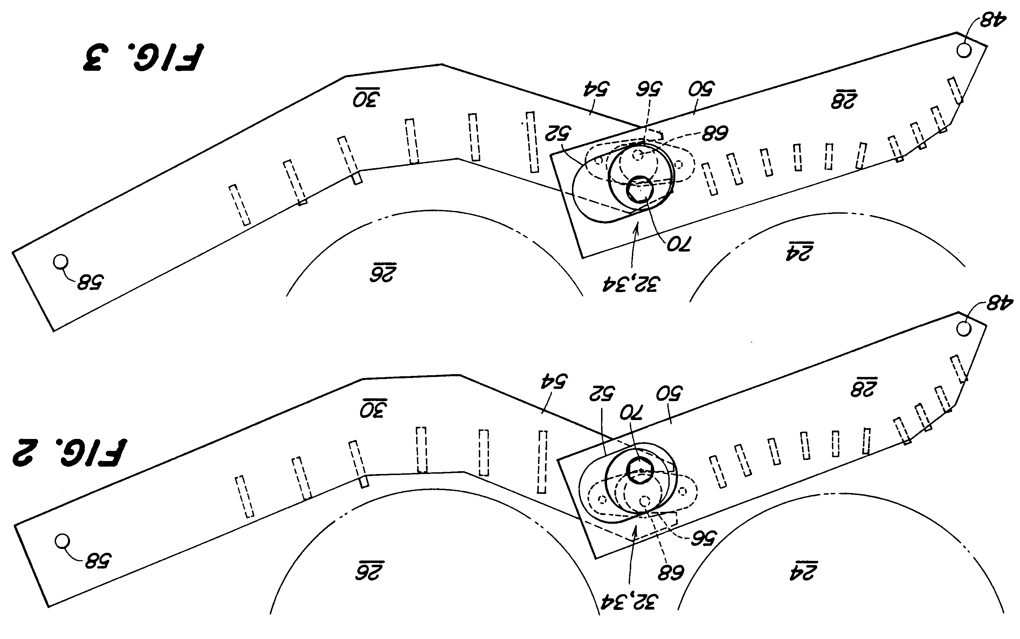

Die vorliegende Erfindung ist auf die Verstellung der Abscheidekörbe 28 und 30 gerichtet, wie es am besten in den Figuren 2 bis 4 gezeigt ist. Die beiden Abscheidekörbe 28 und 30 sind zwischen Seitenwänden 46 des Mähdrschers 10 angeordnet, die zugleich einen Teil des Chassis 12 bilden.

Der erste Abscheidekorb 28 hat mit Bezug auf die Längsflußrichtung des Ernteguts ein erstes Ende, das bei 48 mit dem Dreschkorb 22 verbunden ist. Das zweite in Längsflußrichtung folgende Ende des ersten Abscheidekorbs 28 ist mit einer Schiene 50 versehen, in der sich eine ovale Aussparung 52 für den Eingriff der Verstellvorrichtung 34 befindet.

Das erste Ende des zweiten Abscheidekorbs 30 ist mit einer Schiene 54 mit einem U-förmigen Schlitz 56 versehen, der dem Eingriff mit der Verstellvorrichtung 34 dient. Das zweite in Längsflußrichtung folgende axiale Ende des zweiten Abscheidekorbs 30 ist schwenkbar mit den Seitenwänden 46 an der Anschlußstelle 58 verbunden. Es wird darauf hingewiesen, daß zur Wahrung der Klarheit in den Figuren 2 und 3 der Übergangsrost 32 nicht gezeigt ist.

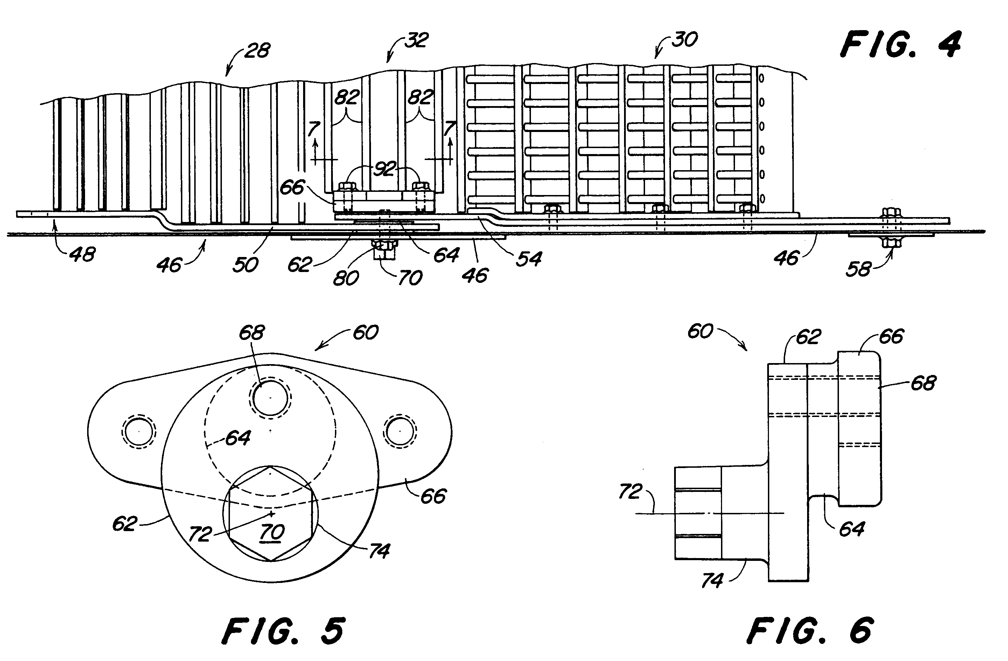

Die Verstellvorrichtung 34 enthält einen Steuerkurventeil 60, der am besten in den Figuren 5 und 6 gezeigt ist, und eine erste und eine zweite Kurvenscheibe 62 und 64 aufweist. Der Steuerkurventeil 50 ist auch mit einer Befestigungsplatte 66, einer Feststellschraubenöffnung 68 und einem Sechskantzapfen 70 versehen.

Die erste runde Kurvenscheibe 62 ist größer als die zweite runde kreisförmige Kurvenscheibe 64 und gelangt in Eingriff mit der ovalen Aussparung 52 des ersten Abscheidekorbs 28. Die zweite Kurvenscheibe 64 gelangt in Eingriff mit dem U-förmigen Schlitz 56 des zweiten Abscheidekorbs 30.

Obwohl nur ein Steuerkurventeil 60 gezeigt ist, besteht die eine Verstellvorrichtung 34 nach diesem Ausführungsbeispiel doch aus zwei Steuerkurventeilen 60, und zwar jeweils einem auf jeder Seite des Mähdreschers 10. Den Sechskantzapfen 70 durchdringt eine Drehachse 72, und er ist mit einer zylindrischen Welle 74 versehen. Die Kurvenscheiben 62 und 64 befinden sich in dem Raum zwischen den Seitenwänden 46. Die zylindrische Welle 74 und der Sechskantzapfen 70 erstrecken sich durch Öffnungen in den Seitenwänden 46. Die Drehachse 72 des Sechskantzapfens 70 bildet zugleich die Drehachse des Steuerkurventeils 60.

Figur 2 zeigt die Verstellvorrichtung 34 und die Abscheidekörbe 28, 30 in ihrer oberen Stellung, hingegen zeigt Figur 3 diese in ihrer unteren Stellung. Der jeweilige Zusammenbau ist in den genannten Stellungen mittels Feststellschrauben 80 arretiert, die sich durch eine obere und eine untere Arretieröffnung in den Seitenwänden 46 erstrecken und in die Feststellschraubenöffnung 68 in den Steuerkurventeilen 60 eingreifen.

Der Übergaberost 32 ist am besten in den Figuren 4 und 7 gezeigt. Normalerweise wäre der Übergaberost 32 offen, wie dies aus Figur 4 hervorgeht; jedoch kann er bei Eintreten widriger und schwieriger Abscheidebedingungen, wie in Figur 7 gezeigt abgedeckt, d. h. verschlossen werden. Um dessen Abscheidefläche zu verschließen, werden Abdeckungen 84 und 86 daran angeschraubt oder auf sonstige Weise daran befestigt. Querstangen 82 bilden einen Rückhalt für die Abdeckungen 84, 86. Der Übergaberost 32 hat zwei Profile, nämlich ein radiales, aggressives Profil 88 und ein tangentiales, weniger aggressives Profil 90. Der Übergaberost 32 wird mittels Schrauben 92 an die Befestigungsplatte 66 angeschraubt.

Um den gesamten Zusammenbau, d. h. die beiden Abscheidekörbe 28 und 30 und den Übergaberost 32 von ihrer oberen in ihre untere Stellung zu bringen, werden zunächst die Feststellschrauben 80 in den beiden Seitenwänden 46 gelöst bzw. entfernt. Dann wird ein Schlüssel mit einem Sechskant auf den Sechskantzapfen 70 aufgesetzt und der Steuerkurventeil 60 um 180° gedreht. Infolgedessen daß und sobald der Steuerkurventeil 60 um eine halbe Umdrehung geschwenkt worden ist, gelangen die beiden Abscheidekörbe 28, 30 in ihre untere Stellung, und der Übergaberost 32 wird um 180° geschwenkt, so daß das radiale, aggressive Profil 88 gegen das weniger aggressive, tangentiale Profil 90 getauscht wird. Anschließend wird der Steuerkurventeil 60 dadurch ortsfest arrettiert, daß die Feststellschrauben 80 durch die unteren Ausnehmungen zum Festlegen in den Seitenwänden 46 in Eingriff mit den Befestigungsausnehmungen in dem Steuerkurventeil 60 gebracht werden.

## Patentansprüche

1. Vorrichtung zum Abscheiden von Restgut aus ein Dreschwerk verlassendem gedroschenem Erntegut bestehend aus einer ersten und einer zweiten Abscheidetrommel (24, 26) und diesen zugeordneten verstellbaren Abscheidekörben (28, 30), dadurch gekennzeichnet, daß an den jeweils einander zugelegenen Endseiten der Abscheidekörbe (28, 30) eine Verstellvorrichtung (34) angreift, mit der diese zwischen einer den Abscheidetrommeln (24, 26) radial naheliegenden und einer diesen radial fernliegenden Stellung verstellbar sind.

2. Vorrichtung nach Anspruch 1, dadurch gekennzeichnet, daß zwischen beiden Abscheidekörben (28, 30) ein diesen gegenüber verstellbarer Übergaberost (32) vorgesehen ist.

3. Vorrichtung nach Anspruch 1 oder 2, dadurch gekennzeichnet, daß die Abscheidekörbe (28, 30) an den jeweils voneinander entfernt liegenden Endseiten ortsfest schwenkbar gelagert sind, wobei der stromaufwärts gelegene Abscheidekorb (28) an einen Dreschkorb (22) des Dreschwerks angeschlossen ist.

4. Vorrichtung nach einem oder mehreren der vorherigen Ansprüche, dadurch gekennzeichnet, daß die Verstellvorrichtung (34) wenigstens einen Steuerkurventeil (60) aufweist, an dem die einander zugelegenen Endseiten der Abscheidekörbe (28, 30) und gegebenenfalls der Übergaberost (32) angreifen und über den diese verstellbar sind.

5. Vorrichtung nach Anspruch 4, dadurch gekennzeichnet, daß die Steuerkurventeile (60) exzentrisch ortsfest gelagert und in wenigstens zwei Stellungen festlegbar sind, wobei durch seine Drehung um ca. 180° die Abscheidekörbe (28, 30) in eine obere oder untere Stellung bringbar sind.

6. Vorrichtung nach einem oder mehreren der vorherigen Ansprüche, dadurch gekennzeichnet, daß in vorzugsweise seitlichen Schienen (50, 54) der Abscheidekörbe (28, 30) Aussparungen und/oder Schlitze (52, 56) zur Aufnahme des Steuerkurventeils (60) vorgesehen sind, die entsprechenden Spielraum für dessen Bewegung belassen.

7. Vorrichtung nach Anspruch 6, dadurch gekennzeichnet, daß der Steuerkurventeil (60) Kurvenscheiben (62, 64) unterschiedlichen Durchmessers aufweist, die den jeweiligen Aussparungen und/oder Schlitzen (52, 56) der Abscheidekörbe (28, 30) zugeordnet sind.

8. Vorrichtung nach einem oder mehreren der vorherigen Ansprüche, dadurch gekennzeichnet, daß der Übergaberost (32) mittels Abdeckungen (84, 86) verschließbar ist.

9. Vorrichtung nach einem oder mehreren der vorherigen Ansprüche, dadurch gekennzeichnet, daß der Übergaberost (32) einerseits ein radiales, aggressives Profil (88) und andererseits ein tangentiales, weniger aggressives Profil (90) aufweist, von denen das radiale Profil (88) in einer oberen Stellung der Abscheidekörbe (28, 30) und das tangentiale Profil (90) in einer unteren Stellung der Abscheidekörbe (28, 30) dem Gutfluß zugewandt ist.

10. Vorrichtung nach einem oder mehreren der vorherigen Ansprüche, dadurch gekennzeichnet, daß der Steuerkurventeil (60) eine Befestigungsplatte (66) zur Aufnahme des Übergaberosts (32) aufweist.
